# EUROPEAN PATENT APPLICATION

(11) **EP 4 704 415 A1**
(43) Date of publication of application: **04.03.2026**
(21) Application number: 24795694.9
(22) Date of filing: 18.03.2024
(51) Int. Cl.: H04N 13/243

(54) **PLAYBACK METHOD FOR SIX-DEGREE-OF-FREEDOM VIDEO, AND ELECTRONIC DEVICE**

(30) Priority: 24.04.2023 CN 202310457081
(71) Applicant: Douyin Vision Co., Ltd., Beijing 100041 (CN)
(72) Inventor: WANG, Feng, Beijing 100028 (CN); WANG, Duotun, Beijing 100028 (CN); XU, Binbin, Beijing 100028 (CN); ZHANG, Qingyuan, Beijing 100028 (CN)
(74) Representative: Grünecker Patent- und Rechtsanwälte PartG mbB
(86) International application number: PCT/CN2024/082294
(87) International publication number: WO 2024/222311

(57) **Abstract**

A method and an electronic device for playing a six-degree-of-freedom video relate to the technical field of immersive video. The method includes: obtaining a first position and a second position, the first position being a position of a target object in a six-degree-of-freedom video at a moment in a virtual three-dimensional space, the second position being a viewpoint position of a user at the same moment in the virtual three-dimensional space; obtaining a line-of-sight direction according to the first position and the second position; obtaining a target viewing angle stream corresponding to the line-of-sight direction among a plurality of viewing angle streams of the six-degree-of-freedom video; and playing the six-degree-of-freedom video in the virtual three-dimensional space based on the target viewing angle stream.

## Description

This application claims the benefit of Chinese Patent Application No. 2023104570817, filed April 24, 2023, entitled "METHOD AND ELECTRONIC DEVICE FOR PLAYING SIX-DEGREE-OF-FREEDOM VIDEO", the entire contents of which are incorporated herein by reference.

### FIELD

The present disclosure relates to the technical field of immersive video, and in particular, to a method and an electronic device for playing a six-degree-of-freedom video.

### BACKGROUND

With the continuous development of display technologies, users have increasingly higher requirements on video viewing experience. In the related technologies, videos with relatively strong immersive feeling such as three-dimensional videos and virtual reality (VR) videos have been proposed, but these videos are often three-degree-of-freedom (DOF) videos that only support a switching pitch angle, a roll angle and a yaw angle, and the videos can only be viewed through a pre-configured viewpoint position, and the video contents at different viewpoint positions cannot be viewed by freely switching the viewpoint positions.

In order to solve the problem that video viewing can only be performed for one viewpoint position, a six-degree-of-freedom technology is proposed in the related technologies. The six-degree-of-freedom technology is a technology of improving the degree of freedom of video viewing, and a user can adjust the viewpoint position of viewing through interaction means in video viewing, so as to perform the video viewing from a desired free viewpoint position, thereby greatly improving the immersion of video viewing. Theoretically, playing the six-degree-of-freedom video in the virtual three-dimensional space can improve two aspects of the video viewing scene and the video viewing freedom, thereby further improving the immersion of the video.

### SUMMARY

In view of this, embodiments of the present disclosure provide a method and an electronic device for playing a six-degree-of-freedom video, and the electronic device is configured to play a six-degree-of-freedom video in a virtual three-dimensional space.

To achieve the foregoing objective, embodiments of this application provide a technical solution as follows.

According to a first aspect, embodiments of this application provide a method of playing a six-degree-of-freedom video, comprising:
obtaining a first position and a second position, the first position being a position of a target object in a six-degree-of-freedom video at a moment in a virtual three-dimensional space, and the second position being a viewpoint position of a user at the moment in the virtual three-dimensional space;
obtaining a line-of-sight direction of viewing the target object from the viewpoint position according to the first position and the second position;
obtaining a target viewing angle stream corresponding to the line-of-sight direction among a plurality of viewing angle streams of the six-degree-of-freedom video;
playing the six-degree-of-freedom video in the virtual three-dimensional space based on the target viewing angle stream.

As an optional implementation manner of the embodiments of this application, playing the six-degree-of-freedom video in the virtual three-dimensional space based on the target viewing angle stream comprises:
setting a virtual screen in the virtual three-dimensional space;
playing the video content corresponding to the target viewing angle stream through the virtual screen to play the six-degree-of-freedom video in the virtual three-dimensional space.

As an optional implementation manner of the embodiments of this application, setting the virtual screen in the virtual three-dimensional space comprises:
determining a pose of the virtual screen according to the line-of-sight direction and the first position;
setting the virtual screen in the virtual three-dimensional space according to the pose of the virtual screen.

As an optional implementation manner of the embodiments of this application, determining the pose of the virtual screen according to the line-of-sight direction and the first position comprises:
determining that the virtual screen is located at the first position, and determining that a plane where the virtual screen is located is perpendicular to the line-of-sight direction.

As an optional implementation manner of the embodiments of this application, the method further comprises:
obtaining a target distance, the target distance being a distance between the first position and the second position;
setting a size of the virtual screen according to the target distance,
wherein the size of the virtual screen is negatively correlated with the target distance.

As an optional implementation manner of the embodiments of this application, obtaining the target viewing angle stream corresponding to the line-of-sight direction among a plurality of viewing angle streams of the six-degree-of-freedom video comprises:
obtaining a target viewing angle stream identifier according to the line-of-sight direction;
sending a viewing angle stream request carrying the target viewing angle stream identifier to a server;
receiving a viewing angle stream response sent by the server and carrying the target viewing angle stream.

As an optional implementation manner of the embodiments of this application, obtaining the target viewing angle stream identifier according to the line-of-sight direction comprises:
obtaining the target viewing angle stream identifier according to the line-of-sight direction and a preset mapping relationship,
wherein the preset mapping relationship comprises respective viewing streams of the six-degree-of-freedom video and directions corresponding to the respective viewing streams of the six-degree-of-freedom video.

According to a second aspect, embodiments of this application provide an electronic device, comprising:
an obtaining unit, configured to obtain a first position and a second position, the first position is a position of a target object in a six-degree-of-freedom video at a moment in a virtual three-dimensional space, and the second position is a viewpoint position of a user at the moment in the virtual three-dimensional space;
a processing unit, configured to obtain a line-of-sight direction according to the first position and the second position, and obtain a target viewing angle stream corresponding to the line-of-sight direction among a plurality of viewing angle streams of the six-degree-of-freedom video;
a playing unit, configured to play the six-degree-of-freedom video in the virtual three-dimensional space based on the target viewing angle stream.

As an optional implementation manner of the embodiments of this application, the playing unit is specifically configured to set a virtual screen in the virtual three-dimensional space; and play the video content corresponding to the target viewing angle stream through the virtual screen to play the six-degree-of-freedom video in the virtual three-dimensional space.

As an optional implementation manner of the embodiments of this application, the playing unit is specifically configured to determine a pose of the virtual screen according to the sight direction and the first position; and set the virtual screen in the virtual three-dimensional space according to the pose of the virtual screen.

As an optional implementation manner of the embodiments of this application, the playing unit is specifically configured to determine that the virtual screen is located at the first position, and determine that a plane where the virtual screen is located is perpendicular to the line-of-sight direction.

As an optional implementation manner of the embodiments of this application, the playing unit is further configured to obtain a target distance, and the target distance is a distance between the first position and the second position; and set a size of the virtual screen according to the target distance,
wherein the size of the virtual screen is negatively correlated with the target distance.

As an optional implementation manner of the embodiments of this application, the processing unit is specifically configured to obtain a target viewing angle stream identifier according to the line-of-sight direction; send a viewing angle stream request carrying the target viewing angle stream identifier to a server; and receive a viewing angle stream response sent by the server and carrying the target viewing angle stream.

As an optional implementation manner of the embodiments of this application, the processing unit is specifically configured to obtain the target viewing angle stream identifier according to the line-of-sight direction and a preset mapping relationship,
wherein the preset mapping relationship comprises respective viewing streams of the six-degree-of-freedom video and directions corresponding to the respective viewing streams of the six-degree-of-freedom video.

According to a third aspect, embodiments of this application provide an electronic device comprising a memory and a processor. The memory is configured to store a computer program, and the processor is configured to, when executing the computer program, cause the electronic device to implement the method of playing a six-degree-of-freedom video according to any one of the foregoing implementations.

According to a fourth aspect, embodiments of this application provide a computer-readable storage medium. When the computer program is executed by a computing device, the computing device implements the method of playing a six-degree-of-freedom video according to any one of the foregoing implementations.

According to a fifth aspect, embodiments of this application provide a computer program product. When the computer program product is executed by a computing device, the computer implements the method of playing a six-degree-of-freedom video according to any one of the foregoing implementations.

### BRIEF DESCRIPTION OF DRAWINGS

The drawings herein are incorporated in and constitute a part of this specification and illustrate embodiments consistent with the present application, and together with the specification serve to explain the principles of the present application.

In order to more clearly illustrate the technical solutions in the embodiments of this application or in the prior art, the accompanying drawings that need to be invoked in the embodiments or the prior art descriptions are briefly introduced below, and it is obvious to those skilled in the art that other drawings may be obtained based on these drawings without creative labor.
FIG. 1 is a scenario architecture diagram of a method of playing a six-degree-of-freedom video according to embodiments of this application;
FIG. 2 is a first flowchart of a method of playing a six-degree-of-freedom video according to embodiments of this application;
FIG. 3 is a schematic diagram of a six-degree-of-freedom video generation method according to embodiments of this application;
FIG. 4 is a schematic diagram of a line-of-sight direction according to embodiments of this application;
FIG. 5 is a first schematic diagram of a viewing angle stream corresponding to a line-of-sight direction according to embodiments of this application;
FIG. 6 is a second schematic diagram of a viewing angle stream corresponding to a line-of-sight direction according to embodiments of this application;
FIG. 7 is a third schematic diagram of a viewing angle stream corresponding to a line-of-sight direction according to embodiments of this application;
FIG. 8 is a fourth schematic diagram of a viewing angle stream corresponding to a line-of-sight direction according to embodiments of this application;
FIG. 9 is a second flowchart of a method of playing a six-degree-of-freedom video according to embodiments of this application;
FIG. 10 is a schematic structural diagram of an electronic device according to embodiments of this application;
FIG. 11 is a schematic diagram of a hardware structure of an electronic device according to embodiments of this application.

### DETAILED DESCRIPTION

For a clearer understanding of the foregoing objectives, features, and advantages of this application, the solutions of this application are further described below. It should be noted that, in the case of without conflict, the features in the embodiments and embodiments of this application may be combined with each other.

Many specific details are set forth in the following description to facilitate a thorough understanding of the present application, but the present application may also be implemented in other manners different from those described herein, and obviously, the embodiments in the specification are only a part of the embodiments of this application, and are not all embodiments.

In this embodiment of this application, words such as "exemplary" or "for example" are used to indicate an example, an example, or an illustration. Any embodiment or design described as "exemplary" or "for example" in the embodiments of the present application should not be construed as being more preferred or advantageous than other embodiments or designs. Rather, the terms "exemplary" or "for example" are invoked to present relevant concepts in a specific manner. In addition, in the description of the embodiments of this application, unless otherwise specified, "a plurality of" means two or more.

The following first describes a scenario architecture of a method of playing a six-degree-of-freedom video according to embodiments of this application.

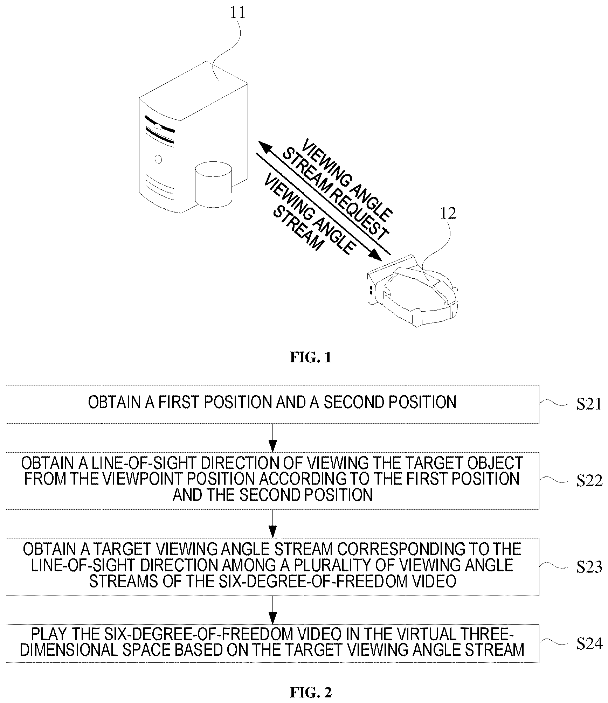

Referring to FIG. 1, a scenario architecture of a method of playing a six-degree-of-freedom video according to embodiments of this application comprises a server 11 and an electronic device 12. The server 11 is configured to generate a six-degree-of-freedom video comprising a plurality of viewing angle streams, receive a viewing angle stream request sent by the electronic device 12, and send a corresponding viewing angle stream to the electronic device 12. The electronic device 12 is configured to construct a virtual three-dimensional space comprising a virtual screen for playing a six-degree-of-freedom video, obtain a first position of a user viewpoint in the virtual three-dimensional space and a second position of a target object in the six-degree-of-freedom video before each video frame of the six-degree-of-freedom video is played, obtain a line-of-sight direction according to the first position and the second position, send a request for a target viewing angle stream corresponding to the line-of-sight direction to the server 11, and play the video content corresponding to the target viewing angle stream on the virtual screen.

The implementation of the server 11 generating the six-degree-of-freedom video comprising a plurality of viewing angle streams may comprise: performing action capturing for a real object (for example, a person or an object), generating driving data for driving a virtual model according to actions of the real object, driving the virtual model through the driving data, and performing video shooting on the virtual model from different shooting viewing angles through the plurality of virtual cameras to obtain the six-degree-of-freedom video comprising the plurality of viewing angle streams.

The electronic device in this embodiment of this application may be set up for immersive video viewing, and for example, may be a VR device and an Augmented Reality (AR) device.

It should be noted that the six-degree-of-freedom video in this embodiment of this application refers to a video that can be viewed at any viewpoint position in front, back, left, right, up and down directions of the three-dimensional space.

Embodiments of this application provide a method of playing a six-degree-of-freedom video, which is applied to an electronic device. As shown in FIG. 2, the method of playing a six-degree-of-freedom video comprises the following steps S21 to S24:
S21: obtain a first position and a second position,
wherein the first position is a position of a target object in a six-degree-of-freedom video at a moment in a virtual three-dimensional space, and the second position is a viewpoint position of a user at the moment in the virtual three-dimensional space.

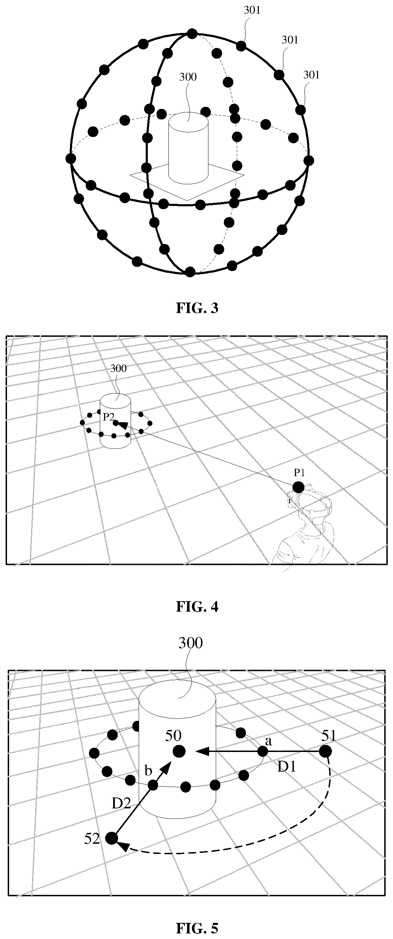

The six-degree-of-freedom video in this embodiment of this application comprises a plurality of viewing angle streams obtained by photographing the target object at different viewing angles. For example, referring to FIG. 3, when performing the six-degree-of-freedom video generation, a plurality of cameras 301 may be set on a sphere with a position of a target object 300 as the center of the sphere, and performing video shooting on the target object 300 from different viewing angles through the plurality of cameras 301 set on the surface of the sphere, to obtain a plurality of viewing angle streams, and finally, generating a six-degree-of-freedom video according to the plurality of viewing angle streams. It should be noted that the relative positions of the plurality of cameras 301 set on the spherical surface and the target object 300 are fixed, and when the target object 300 moves, the plurality of cameras 301 will move along with the target object 300, and keep the relative positions of the cameras 301 and the target object 300 set on the spherical surface unchanged.

In some embodiments, obtaining the first position may comprise: first converting the six-degree-of-freedom video and the virtual three-dimensional space into a same coordinate system according to the camera parameter of the six-degree-of-freedom video, and then calculating the position of the target object in the virtual three-dimensional space according to the displacement information of the target object in the coordinate system of the six-degree-of-freedom video and the initial position of the target object in the virtual three-dimensional space.

In some embodiments, the implementation manner of obtaining the second position may comprise: obtaining data collected by an acceleration sensor, a gyroscope, and the like integrated the electronic device, and calculating the second position according to the data collected by the acceleration sensor, the gyroscope, and the like.

S22: Obtain a line-of-sight direction of viewing the target object from the viewpoint position according to the first position and the second position.

The line-of-sight direction in this embodiment of this application is an extension direction extending from the second position to the first position. For example, as shown in FIG. 4, the position of the target object 300 in the six-degree-of-freedom video in the virtual three-dimensional space is P1, and the viewpoint position of the user in the virtual three-dimensional space is P2, then the line-of-sight direction obtained according to the first position P1 and the second position P2 may be the direction indicated by the arrow in FIG. 4.

S23: Obtain a target viewing angle stream corresponding to the line-of-sight direction among a plurality of viewing angle streams of the six-degree-of-freedom video.

In this embodiment of this application, the target viewing angle stream corresponding to the line-of-sight direction is a viewing angle stream obtained by performing video shooting on the target object by the camera located in the line-of-sight direction.

For example, as shown in FIG. 5, the foregoing step S23 is described with an example where the position of the target object in the six-degree-of-freedom video in the virtual three-dimensional space does not change, and the viewpoint position of the user in the virtual three-dimensional space changes. The position (the first position) of the target object 300 in the six-degree-of-freedom video in the virtual three-dimensional space is 50, and when the viewpoint position (the second position) of the user in the virtual three-dimensional space is 51, the line-of-sight direction is D1, and the camera located in the line-of-sight direction D1 is the camera 'a', so that the viewing angle stream captured by the camera 'a' is taken as the target viewing angle stream corresponding to the line-of-sight direction D1. When the viewpoint position (the second position) of the user in the virtual three-dimensional space is 52, the line-of-sight direction is D2, and the camera located in the line-of-sight direction D2 is the camera 'b', so that the viewing angle stream captured by the camera 'b' is taken as the target viewing angle stream corresponding to the line-of-sight direction D2. When the position of the target object in the virtual three-dimensional space does not change, after the user moves from the position 51 to the position 52, the viewing angle of viewing the target object may be switched from the direction D1 to the direction D2, and the corresponding target viewing angle stream is switched from the viewing angle stream captured by the camera 'a' to the viewing angle stream captured by the camera 'b'.

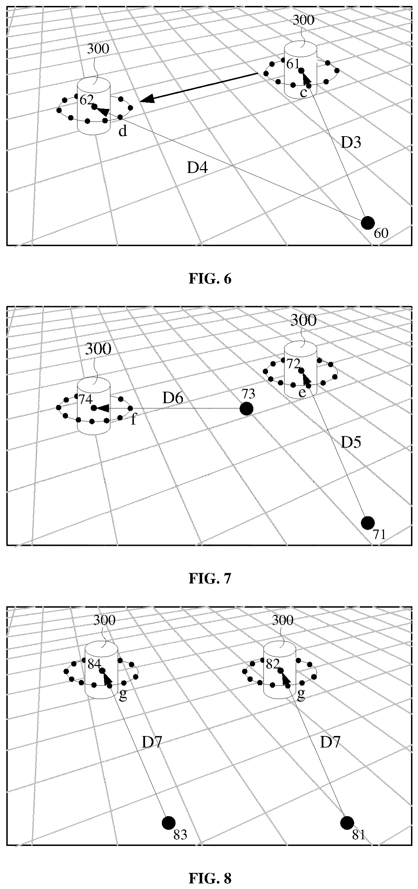

For example, as shown in FIG. 6, the foregoing step S23 is described with an example where the position of the target object 300 in the six-degree-of-freedom video in the virtual three-dimensional space changes, and the viewpoint position of the user in the virtual three-dimensional space does not change . The viewpoint position (the second position) of the user in the virtual three-dimensional space is 60, when the position (the first position) of the target object 300 in the six-degree-of-freedom video in the virtual three-dimensional space is 61, the line-of-sight direction is D3, and the camera located in the line-of-sight direction D3 is the camera 'c', so that the viewing angle stream captured by the camera 'c' is taken as the target viewing angle stream corresponding to the line-of-sight direction D3. When the position (the first position) of the target object 300 in the six-degree-of-freedom video in the virtual three-dimensional space is 62, the line-of-sight direction is D4, and the camera located in the line-of-sight direction D4 is the camera 'd', so the viewing angle stream captured by the camera 'd' is taken as the target viewing angle stream corresponding to the line-of-sight direction D4. When the viewpoint position of the user in the virtual three-dimensional space does not change, after the virtual object moves from the position 61 to the position 62 in the virtual three-dimensional space, the viewing angle of the target object may be switched from the direction D3 to the direction D4, and the corresponding target viewing angle stream is switched from the viewing angle stream captured by the camera 'c' to the viewing angle stream captured by the camera 'd'.

For example, as shown in FIG. 7, the foregoing S23 is described with an example in FIG. 7 where the position of the target object 300 in the six-degree-of-freedom video in the virtual three-dimensional space and the viewpoint position of the user in the virtual three-dimensional space both change. When the position of the target object 300 in the six-degree-of-freedom video in the virtual three-dimensional space is 71, and the viewpoint position (the second position) of the user in the virtual three-dimensional space is 72, the line-of-sight direction is D5, and the camera located in the line-of-sight direction D5 is the camera 'e', so that the viewing angle stream captured by the camera 'e' is taken as the target viewing angle stream corresponding to the line-of-sight direction D5. When the position of the target object 300 in the six-degree-of-freedom video in the virtual three-dimensional space is 73, and the viewpoint position (the second position) of the user in the virtual three-dimensional space is 74, the line-of-sight direction is D6, and the camera located in the line-of-sight direction D6 is the camera 'f', so that the viewing angle stream captured by the camera 'f' is taken as the target viewing angle stream corresponding to the line-of-sight direction. The viewpoint position of the user in the virtual three-dimensional space moves from the position 71 to the position 73, and the virtual object moves from the position 72 to the position 74 in the virtual three-dimensional space, so that the viewing angle of the target object may be switched from the direction D5 to the direction D6, and the corresponding target viewing angle stream is switched from the viewing angle stream captured by the camera 'e' to the viewing angle stream captured by the camera 'f'.

For example, as shown in FIG. 8, the foregoing step S23 is described with an example in FIG. 8 wherein the position of the target object 300 in the six-degree-of-freedom video in the virtual three-dimensional space and the viewpoint position of the user in the virtual three-dimensional space both change. When the position of the target object 300 in the six-degree-of-freedom video in the virtual three-dimensional space is 81, and the viewpoint position (the second position) of the user in the virtual three-dimensional space is 82, the line-of-sight direction is D7, and the camera located in the line-of-sight direction D7 is the camera 'g', so that the viewing angle stream captured by the camera 'g' is taken as the target viewing angle stream corresponding to the line-of-sight direction D7. When the position of the target object 300 in the six-degree-of-freedom video in the virtual three-dimensional space is 83, and the viewpoint position (the second position) of the user in the virtual three-dimensional space is 84, the line-of-sight direction is still D7, and the camera located in the line-of-sight direction D7 is still camera 'g', thus the viewing angle stream captured by the camera 'g' is still taken as the target viewing angle stream corresponding to the line-of-sight direction. The viewpoint position of the user in the virtual three-dimensional space moves from the position 81 to the position 83, and the virtual object moves from the position 82 to the position 84 in the virtual three-dimensional space, so that the viewing angle of the target object is kept in the direction D7, and the corresponding target viewing angle flow is still the viewing angle flow captured by the camera 'g'.

S24: Play the six-degree-of-freedom video in the virtual three-dimensional space based on the target viewing angle stream.

The method for playing the six-degree-of-freedom video provided by the embodiments of the application includes: when playing the six-degree-of-freedom video in the virtual three-dimensional space, obtaining the first position of the target object in the six-degree-of-freedom video in the virtual three-dimensional space and the second position of the user viewpoint in the virtual three-dimensional space at the moment, then obtaining the line-of-sight direction of viewing the target object from the viewpoint position according to the first position and the second position, and obtaining the target viewing angle stream corresponding to the line-of-sight direction among a plurality of viewing angle streams of the six-degree-of-freedom video, and playing the six-degree-of-freedom video in the virtual three-dimensional space based on the target viewing angle stream. Because the line-of-sight direction determined according to the first position and the second position is the line-of-sight direction of the target object in the six-degree-of-freedom video being viewed by the user in the virtual three-dimensional space, the effect of switching the corresponding viewing angle stream following the line-of-sight direction of the target object viewed by the user and viewing the corresponding viewing angle stream at any viewpoint position can be achieved by obtaining the target viewing angle stream corresponding to the line-of-sight direction among the plurality of viewing angle streams of the six-degree-of-freedom video and playing the six-degree-of-freedom video in the virtual three-dimensional space based on the target viewing angle stream, and playing the six-degree-of-freedom video in the virtual three-dimensional space can be implemented.

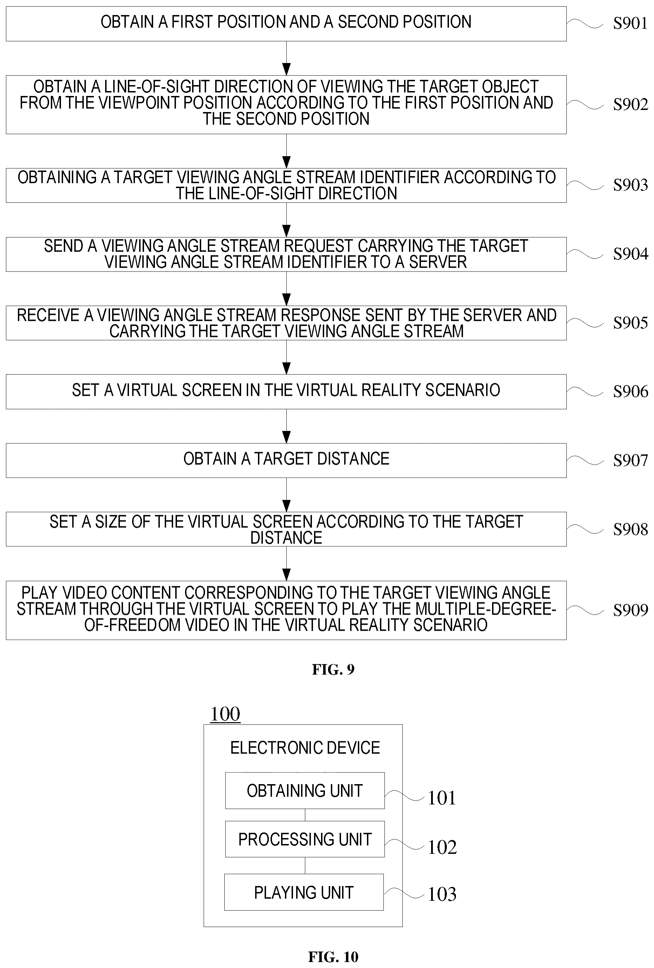

As an extension and refinement of the foregoing embodiment, embodiments of this application provide another method of playing a six-degree-of-freedom video, as shown in FIG. 9. The method of playing a six-degree-of-freedom video comprises the following steps.

S901: Obtain a first position and a second position,
wherein the first position is a position of a target object in a six-degree-of-freedom video at a moment in a virtual three-dimensional space, and the second position is a viewpoint position of a user at the moment in the virtual three-dimensional space.

S902: Obtain a line-of-sight direction of viewing the target object from the viewpoint position according to the first position and the second position.

Implementation manners of the foregoing steps S901 and S902 are the same as implementation manners of steps S21 and S22 in the embodiment shown in FIG. 2, and details are not described herein again.

S903: Obtain a target viewing angle stream identifier according to the line-of-sight direction.

In some embodiments, the step S903 of obtaining the target viewing angle stream identifier according to the line-of-sight direction comprises: obtaining the target viewing angle stream identifier according to the line-of-sight direction and a preset mapping relationship,
wherein the preset mapping relationship comprises respective viewing streams of the six-degree-of-freedom video and directions corresponding to the respective viewing streams of the six-degree-of-freedom video.

For example, the preset mapping relationship may be shown in Table 1 below:

**Table 1**

| Viewing Angle Stream Identifier | Corresponding Direction |
|---|---|
| Identifier of Viewing Angle Stream a | Direction1 |
| Identifier of Viewing Angle Stream b | Direction2 |
| Identifier of Viewing Angle Stream c | Direction3 |
| Identifier of Viewing Angle Stream d | Direction4 |
| Identifier of Viewing Angle Stream e | Direction5 |
| ··· | ··· |

When the preset mapping relationship is as shown in Table 1 above, and the line-of-sight direction is direction 3, the identifier of the viewing angle stream c is determined as the target viewing stream identifier.

S904: Send a viewing angle stream request carrying the target viewing angle stream identifier to a server.

S905: Receive a viewing angle stream response sent by the server and carrying the target viewing angle stream.

S906: Set a virtual screen in the virtual three-dimensional space.

**In** some embodiments, setting the virtual screen in the virtual three-dimensional space comprises: determining a pose of the virtual screen according to the line-of-sight direction and the first position, and setting a virtual screen in the virtual three-dimensional space according to the pose of the virtual screen.

**It** should be noted that, because in the process of playing the six-degree-of-freedom video in the virtual three-dimensional space, the virtual screen always exists in the virtual three-dimensional space, thus setting the virtual screen in the virtual three-dimensional space, and determining the pose of the virtual screen according to the line-of-sight direction and the first position may also be described as: setting a virtual screen in the virtual three-dimensional space only when the six-degree-of-freedom video starts to be played, and then adjusting the pose of the virtual screen according to the obtained line-of-sight direction and the first position in the process of playing the six-degree-of-freedom video.

**In** some implementations, determining the pose of the virtual screen according to the line-of-sight direction and the first position comprises:
determining that the virtual screen is located at the first position, and determining that a plane where the virtual screen is located is perpendicular to the line-of-sight direction.

Because the virtual screen is determined to be located in the first position and the plane where the virtual screen is located is determined to be perpendicular to the line-of-sight direction, in this embodiment of this application, when the viewing stream of the six-degree-of-freedom video is played through the virtual screen, the target object is located at the first position of the virtual scene, and the user can view the display content of the target viewing stream normally.

S907: Obtain a target distance.

The target distance is a distance between the first position and the second position.

S908: Set a size of the virtual screen according to the target distance,
wherein the size of the virtual screen is negatively correlated with the target distance.

Because the foregoing embodiment further obtains the distance between the first position and the second position, and sets the size of the virtual screen according to the distance between the first position and the second position, and the size of the virtual screen is negatively correlated with the target distance, the foregoing embodiment may make the target object smaller when the user is farther away from the target object, and make the target object larger when the user is closer to the target object, thereby meeting a near-far small visual rule, and further improving the reality of the target object.

S909: Play the video content corresponding to the target viewing angle stream through the virtual screen, so as to play the six-degree-of-freedom video in the virtual three-dimensional space.

**In** some embodiments, the transparency of the virtual screen and the background of the six-degree-of-freedom video may be 100%.

Setting the transparency of the virtual screen and the background of the six-degree-of-freedom video to be 100% allows that, when the video content corresponding to the target viewing stream is played through the virtual screen, only the target object is displayed, and other regions other than the target object are the content of the virtual three-dimensional space, thereby improving the immersion of the six-degree-of-freedom video.

Based on the same inventive concept, as an implementation of the foregoing method, embodiments of this application further provide an electronic device, the embodiment corresponds to the foregoing method embodiment, for ease of reading, the details of the foregoing method embodiments are not described in detail again in this embodiment, but it should be clear that the electronic device in this embodiment can correspondingly implement the entire content in the foregoing method embodiments.

Embodiments of this application further provide an electronic device, FIG. 10 is a schematic structural diagram of the electronic device. As shown in FIG. 10, the electronic device 100 comprises:
an obtaining unit 101, configured to obtain a first position and a second position, the first position is a position of a target object in a six-degree-of-freedom video at a moment in a virtual three-dimensional space, and the second position is a viewpoint position of a user at the moment in the virtual three-dimensional space;
a processing unit 102, configured to obtain a line-of-sight direction of viewing the target object from the viewpoint location according to the first position and the second position, and obtain a target viewing angle stream corresponding to the line-of-sight direction among a plurality of viewing angle streams of the six-degree-of-freedom video;
a playing unit 103, configured to play the six-degree-of-freedom video in the virtual three-dimensional space based on the target viewing angle stream.

As an optional implementation manner of the embodiments of this application, the playing unit is specifically configured to set a virtual screen in the virtual three-dimensional space; and play the video content corresponding to the target viewing angle stream through the virtual screen, so as to play the six-degree-of-freedom video in the virtual three-dimensional space.

As an optional implementation manner of the embodiment of this application, the playing unit 103 is specifically configured to determine the pose of the virtual screen according to the line-of-sight direction and the first position.

As an optional implementation manner of the embodiments of this application, the playing unit 103 is specifically configured to determine that the virtual screen is located in the first position, and determine that a plane where the virtual screen is located is perpendicular to the line-of-sight direction.

As an optional implementation manner of the embodiments of this application, the playing unit 103 is further configured to obtain a target distance, and the target distance is a distance between the first position and the second position; and set a size of the virtual screen according to the target distance,
wherein the size of the virtual screen is negatively correlated with the target distance.

As an optional implementation manner of the embodiments of this application, the processing unit 102 is specifically configured to obtain a target viewing angle stream identifier according to the line-of-sight direction; send a viewing angle stream request carrying the target viewing angle stream identifier to a server; and receive a viewing angle stream response sent by the server and carrying the target viewing angle stream.

As an optional implementation manner of the embodiments of this application, the processing unit 102 is specifically configured to obtain the target viewing angle stream identifier according to the line-of-sight direction and a preset mapping relationship,
wherein the preset mapping relationship comprises respective viewing streams of the six-degree-of-freedom video and directions corresponding to the respective viewing streams of the six-degree-of-freedom video.

**The** electronic device provided in this embodiment may execute the method of playing a six-degree-of-freedom video provided in the foregoing method embodiments, and an implementation principle thereof is similar to that of the technical effect, and details are not described herein again.

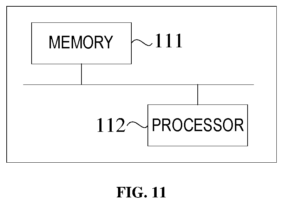

Based on the same inventive concept, embodiments of this application further provide an electronic device. FIG. 11 is a schematic structural diagram of an electronic device according to embodiments of this application, as shown in FIG. 11, the electronic device provided in embodiments of this application comprises: a memory 111 and a processor 112, the memory 111 is configured to store a computer program and the processor 112 is configured to perform a method of playing a six-degree-of-freedom video provided in the foregoing embodiment when executing the computer program.

Based on the same inventive concept, embodiments of this application further provide a computer-readable storage medium, where the computer-readable storage medium stores a computer program, and when the computer program is executed by a processor, the computing device implements the method of playing a six-degree-of-freedom video provided in the foregoing embodiments.

Based on the same inventive concept, embodiments of this application further provide a computer program product, when the computer program product runs on a computer, cause the computing device implements the method of playing a six-degree-of-freedom video provided in the foregoing embodiments.

Those skilled in the art should understand that the embodiments of the present disclosure may be provided as a method, a system, or a computer program product. Thus, the present application may take the form of an entirely hardware embodiment, full software embodiments, or embodiments combining software and hardware aspects. Moreover, the present application may take the form of a computer program product embodied on one or more computer-usable storage media having computer-usable program code embodied therein.

The processor may be a central processing unit (CPU), or may be another general purpose processor, a digital signal processor (DSP), an application specific integrated circuit (ASIC), a field programmable gate array (FPGA) or another programmable logic device, a discrete gate or transistor logic device, a discrete hardware component, or the like. The general purpose processor may be a microprocessor or the processor may be any conventional processor or the like.

The memory may comprise non-persistent memory in a computer-readable medium, random access memory (RAM), and / or non-volatile memory, such as read-only memory (ROM) or flash RAM. The memory is an example of a computer-readable medium.

Computer-readable media include permanent and non-permanent, removable and non-removable storage media. The storage medium may be implemented by any method or technique, which may be computer-readable instructions, data structures, modules of programs, or other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read-only memory (CD-ROM), digital versatile disc (DVD) or other optical storage, magnetic cassettes, magnetic disk storage or other magnetic storage devices, or any other non-transmission medium, which can be used to store information that can be accessed by a computing device. According to the definitions herein, computer-readable media do not include transitory media, such as modulated data signals and carriers.

Finally, it should be noted that the foregoing embodiments are only used to illustrate the technical solutions of this application, but not to limit the foregoing embodiments, although the present disclosure has been described in detail with reference to the foregoing embodiments, those skilled in the art should understand that the technical solutions described in the foregoing embodiments may still be modified, or some or all of the technical features may be equivalently replaced, and these modifications or replacements are not made to depart from the scope of the technical solutions in the embodiments of this application.

## Claims

1. A method of playing a six-degree-of-freedom video, **characterized by** comprising:
obtaining a first position and a second position, the first position being a position of a target object in a six-degree-of-freedom video at a moment in a virtual three-dimensional space, and the second position being a viewpoint position of a user at the moment in the virtual three-dimensional space;
obtaining a line-of-sight direction of viewing the target object from the viewpoint position according to the first position and the second position;
obtaining a target viewing angle stream corresponding to the line-of-sight direction among a plurality of viewing angle streams of the six-degree-of-freedom video;
playing the six-degree-of-freedom video in the virtual three-dimensional space based on the target viewing angle stream.

2. The method according to claim 1, **characterized in that** playing the six-degree-of-freedom video in the virtual three-dimensional space based on the target viewing angle stream comprises:
setting a virtual screen in the virtual three-dimensional space;
playing video content corresponding to the target viewing angle stream through the virtual screen to play the six-degree-of-freedom video in the virtual three-dimensional space.

3. The method according to claim 2, **characterized in that** setting the virtual screen in the virtual three-dimensional space comprises:
determining a pose of the virtual screen according to the line-of-sight direction and the first position;
setting the virtual screen in the virtual three-dimensional space according to the pose of the virtual screen.

4. The method according to claim 3, **characterized in that** determining the pose of the virtual screen according to the line-of-sight direction and the first position comprises:
determining that the virtual screen is located at the first position, and determining that a plane where the virtual screen is located is perpendicular to the line-of-sight direction.

5. The method according to claim 2, **characterized by** further comprising:
obtaining a target distance, the target distance being a distance between the first position and the second position;
setting a size of the virtual screen according to the target distance,
wherein the size of the virtual screen is negatively correlated with the target distance.

6. The method according to claim 1, **characterized in that** obtaining the target viewing angle stream corresponding to the line-of-sight direction among the plurality of viewing angle streams of the six-degree-of-freedom video comprises:
obtaining a target viewing angle stream identifier according to the line-of-sight direction;
sending a viewing angle stream request carrying the target viewing angle stream identifier to a server;
receiving a viewing angle stream response sent by the server and carrying the target viewing angle stream.

7. The method according to claim 6, **characterized in that** obtaining the target viewing angle stream identifier according to the line-of-sight direction comprises:
obtaining the target viewing angle stream identifier according to the line-of-sight direction and a preset mapping relationship,
wherein the preset mapping relationship comprises respective viewing streams of the six-degree-of-freedom video and directions corresponding to the respective viewing streams of the six-degree-of-freedom video.

8. An electronic device, comprising:
an obtaining unit configured to obtain a first position and a second position, the first position being a position of a target object in a six-degree-of-freedom video at a moment in a virtual three-dimensional space, and the second position being a viewpoint position of a user at the moment in the virtual three-dimensional space;
a processing unit configured to obtain a line-of-sight direction of viewing the target object from the viewpoint position according to the first position and the second position, and obtain a target viewing angle stream corresponding to the line-of-sight direction among a plurality of viewing angle streams of the six-degree-of-freedom video;
a playing unit configured to play the six-degree-of-freedom video in the virtual three-dimensional space based on the target viewing angle stream.

9. An electronic device, **characterized by** comprising: a memory and a processor, the memory being configured to store a computer program, and the processor being configured to, when executing a computer program, cause the electronic device to implement the method of playing the six-degree-of-freedom video according to any one of claims 1 to 7.

10. A computer-readable storage medium, **characterized in that** the computer-readable storage medium stores a computer program, and when the computer program is executed by a computing device, the computing device implements the method of playing the six-degree-of-freedom video according to any one of claims 1 to 7.
